# EUROPEAN PATENT SPECIFICATION

(11) **EP 0 746 199 B1**
(45) Date of publication and mention of the grant of the patent: **09.06.1999**
(21) Application number: 95909049.9
(22) Date of filing: 24.02.1995
(51) Int. Cl.: A01N 25/20, C01B 31/18

(54) **GAS CARTRIDGE**
GAS PATRONE
CARTOUCHE DE GAZ

(30) Priority: 25.02.1994 GB 9403678
(43) Date of publication of application: 11.12.1996
(73) Proprietor: MINISTER OF AGRICULTURE FISHERIES AND FOOD IN HER BRITANNIC MAJESTY'S GOV. OF THE U.K. OF GREAT BRITAIN AND NORTHERN IRELAND, London SW1A 2HH (GB)
(72) Inventor: PAGE, Robert, John, Clifford, Worplesdon Surrey GU3 3LQ (GB); NADIAN, Allan, Kunamoney, Slough Berkshire SL3 7HJ (GB)
(74) Representative: Allen, Philippa Margaret
(86) International application number: GB9500389
(87) International publication number: WO9522895

(56) References cited:
- CH-A- 167 724
- FR-A- 2 362 918
- US-A- 4 309 397
- DATABASE WPI Week 6800 Derwent Publications Ltd., London, GB; AN 67-08878G [00] & ZA,A,6 605 717 (UNIVERSITY OF POTCHEFSTROOM)

## Description

The present invention relates to a novel carbon monoxide gas cartridges for use in the control of animal populations, particularly for use in control of vertebrate pests such as rabbits.

Financial losses in Britain caused by rabbits (Oryctolagus cuniculus) through lower crop yields or the high cost of replanting rabbit damaged trees are conservatively estimated at over £100 million annually. Such impact requires effective rabbit control and emphasises the value of improved control methods; fumigation is the most effective method available in most situations in the UK.

The use of fumigant pesticides against rabbits is confined to gassing with phosphine (PH₃) or hydrogen cyanide (HCN) generating powder. The toxicity of carbon monoxide (CO) to mammals is well documented and its novel use to control rabbits has advantages over the use of hydrogen cyanide, including safe handling under most field conditions.

There are however serious disadvantages in the use of both of these fumigants. Both types rely on the generation of toxic gas by the action of moisture on the formulation and so can only be used safely in dry weather. Also the HCN generating product (Cymag) is a loose powder and should not be used in anything more than a gentle breeze. Both types are potentially hazardous to store or transport.

The principle of generating CO by igniting a cartridge containing sources of carbon and oxygen is known and is in use in several countries. In the USA, Denver Wildlife Research Centre developed two different cartridges for control of coyotes and small burrowing mammals respectively. Results of the performance of these cartridges have been published and the products themselves are made and sold by Pocatello Supply Depot. However, these cartridges are unsuitable for use against rabbits because they are too large or contain toxic and irritant gas generators of doubtful humaneness.

The present inventor has now provided a CO generating composition, and a cartridge for containing it in use, that can be used regardless of weather conditions and, since the ingredients are non-toxic until ignited, is much safer to store and transport with resulted reduction in costs. Furthermore the fumigation provided is at least as humane as present alternatives and allows cartridges of a size suited to placement in rabbit warrens to be produced.

Thus in a first aspect of the present invention there is provided a composition, capable of generating carbon monoxide gas on being ignited, comprising an oxidising agent, a carbon based fuel and a zinc and oxygen containing compound in an amount of 15% or more based upon the weight of the final composition weight: preferably from 15% to 25% by weight.

Preferably the carbon based fuel is in the form of elemental carbon, and more preferably is charcoal. The oxidising agent is preferably a nitrate and is more preferably sodium nitrate. The zinc compound is preferably zinc oxide. The preferred ratio of sodium nitrate to charcoal is from 6:4 to 7:3. The preferred percentage of zinc oxide in the final composition is 20% by weight but may be higher.

In a second aspect of the present invention there is provided a fumigant cartridge comprising a cardboard container filled or part filled with a composition of the invention with a fuse extending between the container exterior and the composition such that in use ignition of the fuse will lead to ignition of the composition and resultant generation of carbon monoxide gas.

Cartridges are preferably of less than 100g composition in weight, more preferably less than 70g in weight and 65g has been found to be a suitable quantity for warren fumigation purposes.

It has been found that use of the composition of the present invention provides an increase of 70% in the yield of carbon monoxide produced and thus allows use of containers of size suitable for placement on rabbit warrens.

The compositions and cartridges of the invention and a method for their use will now be described by way of illustration only by reference to the following non-limiting examples.

### EXAMPLE 1.

Compositions of the invention were provided by mixing sodium nitrate, charcoal and zinc oxide in the ratios set out in the tables below. Compositions were packed into cardboard cylinders at 65g per cylinder and ignited by lighting a fuse passing into contact with the composition. Significantly it was noted that the presence of zinc oxide tended to reduce the spillage of material from the cartridge.

The Savarie cartridge was made from strips of cardboard 1.5mm thick formed into a spiral tube and cut into 71mm lengths with 40.5mm external diameter. Both ends were sealed with cardboard closures, one of which had provision for perforations for ten gas outlets plus one for the fuse.

The sodium nitrate was prilled (Chilean) obtained from Ellis Everard, London and the charcoal was granular particle size 0.85-1.70mm from Merck Chemicals Poole. The packing was made of paper or cardboard tubes purchased from Sonoco Ltd, Huddersfield, UK, with cardboard closures similarly perforated and fused to the Savarie cartridges. Each fuse was made into a tuning fork configuration from two 18cm lengths of slow plastic igniter cord (ICI Nobel Explosives) and inserted into the cartridge while filling around it such that the fuse protruded out of one of the perforations.

To investigate the effect of zinc oxide on CO production a partially evacuated 260 litre stainless steel chamber with five small ports and two inlet/outlet valves. A vacuum pump was used to purge gas from the chamber to the atmosphere at the end of each test. The fuse of each cartridge was ignited electrically within the chamber at half normal atmospheric pressure, the maximum temperature and pressure being recorded together with the interval from ignition to gas sampling. The chamber and its contents were allowed to cool to below 40°C and reach normal atmospheric pressure before measuring the CO concentration produced by each cartridge using Gastec gas analyser tubes accurate to ±25% acting through one of the ports and fitted directly to a hand sampling pump.

The accuracy of the tubes was compared against gas chromatography (Hewlett Packard 5000) readings using a thermal conductivity detector (TCD) with an approximate accuracy of ± 10% and against known concentrations of CO in the chamber.

All CO readings were taken using gas analyser tubes with a proportion being checked with gas chromatography. There was no significant difference in the amounts of CO evolved between the cartridge described by Savarie and the standard sodium nitrate/charcoal cartridge (%CO = 0.97 and 0.78 respectively) using the Mann-Whitney test U=29 ns; the standard cartridge produced 1.17 litres of CO.

**TABLE 1**

| %CO evolved from various mixtures without zinc oxide. | | | |
|---|---|---|---|
| TYPE OF MIXTURE | | %CARBON MONOXIDE | |
| %NaNO₃ | %Charcoal | | |
| 60 | 40 | Failed to ignite | |
| 65 | 35 | 0.94 | SD 0.261 |
| 70 | 30 | 0.86 | SD 0.114 |

**TABLE 2**

| %CO evolved from 65:35 mixture with varying zinc oxide content. | | | |
|---|---|---|---|
| ZINC OXIDE CONTENT | n | %CARBON MONOXIDE | |
| 0% | 6 | 1.1 | SD 0.318 |
| 10 | 3 | 1.0 | SD 0.329 |
| 15 | 3 | 1.2 | SD 0.329 |
| 20 | 4 | 1.9 | SD 0.320 |

It was noted that cardboard packing gave higher CO levels, particularly if of the type used in the Savarie packing. Using the optimised cartridge and composition 4.9 litres of CO is generated as opposed to 2.86 in the absence of zinc oxide per 65g cartridge.

### EXAMPLE 2.

Field trials were carried out using semi-artificial rabbit warrens of approximate volume 300 litres comprising 18.5 metres of plastics netting based tunnels with six entrances, five blind ends and fourteen gas sampling points inserted into their tunnels. Maximum CO concentration recorded was 35% but generally CO levels were less, with highest and lowest CO concentrations at the entrances and dead ends respectively. The mean levels of CO after one hour were 4.2% SD 3.6 at the entrances, 2.9% SD 2.0 at the midpoints and 1.5% SD 1.6 at the dead ends.

There was relatively little movement of CO through the warren but in most parts concentrations of ≥ 1% were maintained for one hour or more; these being sufficient to ensure rapid and relatively humane death of rabbits. Windspeed and direction were shown to have significant effects on CO concentration and distribution.

### EXAMPLE 3.

Earlier research has shown that exposure of rabbits to the concentrations of carbon monoxide (CO) found close to entrances of rabbit warrens after treatment with CO cartridges results in relatively rapid insensibility and death. The concentrations of CO found in deeper parts of treated warrens causes no apparent ill effects in rabbits.

Exposure of rabbits to CO in an artificial rabbit warren showed that rabbits approaching treated entrances within 1 or 2 hours after treatment were rendered insensible very rapidly, and that rabbits remaining in deeper parts of the warren for more than 3 hours were apparently unaffected. Tests were extended to natural warrens containing known numbers of rabbits to investigate the effectiveness and relative humaneness of treatment with CO cartridges.

Methods: Warrens used were natural rabbit warrens constructed by rabbits in grassland with flinty soil overlaying chalk. Adult wild rabbits were obtained from stocks held in large enclosures. Carbon monoxide (CO) cartridges were made up as described in Example 1. Cymag powder was obtained from Zeneca Ltd.

Six warrens, each with four entrance holes that were known to interconnect, were surrounded with weld-mesh panels (60 cm high) and covered with plastic netting. Four rabbits were put into each warren immediately before treatment with either CO cartridges or Cymag.

CO treatment: Three warrens were treated with CO cartridges by placing two cartridges approximately 10cm inside each entrance, igniting the cartridges and sealing the entrances with sandbags. Four hours after treatment all entrances were opened and cage traps set within the weld-mesh enclosure. Forty eight hours after treatment all warrens were excavated to retrieve the rabbits and to determine the structure of each warren.

Cymag treatment: Three warrens were treated with Cymag by placing a heaped tablespoon of Cymag powder (approx. 30g) approximately 30cm inside each entrance, which was then sealed with sandbags. Forty eight hours after treatment all warrens were excavated to retrieve the rabbits and to determine the structure of each warren.

### Results:

In each of the warrens treated with CO cartridges all four rabbits were killed. Ten of the twelve rabbits were found within 60cm of an entrance; the other two were found in a blind end. The fact that the rabbits were found near the entrances indicates that they were rendered insensible very quickly and there were no indications of suffering in the rabbits found in a blind end.

Eight rabbits were killed by the cyanide treatment; all four in each of the two warrens treated with Cymag. In the third warren treated with Cymag no rabbits were found dead, two were later found alive and all were assumed to have survived.

### EXAMPLE 4.

Two larger warrens, one with 13 entrance holes and one with 16 entrance holes, in the same area of grassland, were surrounded with wire-mesh and covered in plastic netting as in Example 3. Eight rabbits fitted with radio collars were put into each warren and allowed to settle for two days. During that period rabbits had extended the warrens to 17 entrances in each. One warren was treated with CO cartridges of the invention and the other with Cymag as in Example 3.

Three hours after treatment sandbags were removed from the warren treated with CO and any rabbits close to the entrances were recovered. The positions of other rabbits were determined by means of the radio signals and their positions marked. Cage traps were set within the enclosures to capture any rabbits digging out of the warrens. Forty eight hours after the treatment entrances to each warren were opened and rabbits located and recovered using the radio collars.

### Results:

CO treatment: Four rabbits were found dead and one was found alive 3 hours after treatment but apparently insensible in a deep tunnel directly underneath an entrance. The remaining three rabbits were assumed to have died since their positions determined by radio transmitters were unaltered for several days.

HCN treatment: All eight rabbits were found dead close to treated entrances when the entrances were opened forty eight hours after treatment.

All rabbits in the warrens treated with CO were killed indicating that the treatments were effective. The closeness of the dead rabbits to the entrances where CO concentrations are high indicate that they died humanely with rapid onset of insensibility.

## Claims

1. A composition capable of generating carbon monoxide gas comprising an oxidising agent, a carbon based fuel and a zinc and oxygen containing compound in an amount of 15% or more based upon the weight of the final composition weight, characterised in that the composition generates carbon monoxide gas on being ignited.

2. A composition as claimed in claim 1 wherein the carbon based fuel is in the form of elemental carbon.

3. A composition as claimed in claim 2 wherein the fuel is charcoal.

4. A composition as claimed in any one of claims 1 to 3 wherein the oxidising agent is a nitrate.

5. A composition as claimed in claim 4 wherein the nitrate is sodium nitrate.

6. A composition as claimed in any one of the preceding claims wherein the zinc and oxygen containing compound is zinc oxide.

7. A composition as claimed in any one of the preceding claims wherein the ratio of sodium nitrate to charcoal is from 6:4 to 7:3.

8. A composition as claimed in claim 7 wherein the percentage of zinc oxide in the final composition is 20% by weight.

9. A fumigant cartridge comprising a cardboard container filled or part filled with a composition as claimed in any one of the preceding claims.

10. A cartridge as claimed in claim 9 having a fuse extending between the container exterior and the composition such that in use ignition of the fuse will lead to ignition of the composition and resultant generation of carbon monoxide gas.

## Patentansprüche

1. Eine Zusammensetzung, bestehend aus einem Oxidationsmittel, einem Brennstoff auf Kohlenstoffbasis und einer Zink und Sauerstoff beinhaltenden Verbindung, die Kohlenmonoxidgas in einer Menge von 15% oder mehr basierend auf dem Gewicht der endgültigen Zusammensetzung erzeugen kann, dadurch gekennzeichnet, daß die Zusammensetzung beim Entzünden Kohlenmonoxidgas erzeugt.

2. Zusammensetzung gemäß Anspruch 1, wobei der Brennstoff auf Kohlenstoffbasis in der Form von elementarem Kohlenstoff vorliegt.

3. Zusammensetzung gemäß Anspruch 2, wobei der Brennstoff Holzkohle ist.

4. Zusammensetzung gemäß einem der Ansprüche 1 bis 3, wobei das Oxidationsmittel ein Nitrat ist.

5. Zusammensetzung gemäß Anspruch 4, wobei das Nitrat Natriumnitrat ist.

6. Zusammensetzung gemäß einem der vorhergehenden Ansprüche, wobei die Zink und Sauerstoff beinhaltende Verbindung Zinkoxid ist.

7. Zusammensetzung gemäß einem der vorhergehenden Ansprüche, wobei das Verhältnis zwischen Natriumnitrat und Holzkohle 6/4 bis 7/3 beträgt.

8. Zusammensetzung gemäß Anspruch 7, wobei der prozentuelle Anteil von Zinkoxid in der endgültigen Zusammensetzung 20 Gew.-% ausmacht.

9. Eine aus einem Behälter aus Pappe bestehende Räuchermittelpatrone, die ganz oder teilweise mit einer Zusammensetzung gemäß einem der vorhergehenden Ansprüche gefüllt ist.

10. Patrone gemäß Anspruch 9 mit einer Schmelzsicherung, die zwischen dem Äußeren des Behälters und der Zusammensetzung verläuft, so daß bei Gebrauch das Entzünden der Schmelzsicherung zum Entzünden der Zusammensetzung und somit zur Erzeugung von Kohlermonoxidgas führt.

## Revendications

1. Une composition pouvant générer du monoxyde de carbone gazeux comprenant un agent oxydant, un combustible à base de carbone et un composé contenant du zinc et de l'oxygène dans une quantité d'au moins 15% sur la base du poids de la composition finale, caractérisée en ce que la composition génère du monoxyde de carbone gazeux lorsqu'elle est enflammée.

2. Une composition selon la revendication 1 dans laquelle le combustible à base de carbone est sous forme de carbone élémentaire.

3. Une composition selon la revendication 2 dans laquelle le combustible est du charbon de bois.

4. Une composition selon une quelconque des revendications 1 à 3 dans laquelle l'agent oxydant est un nitrate.

5. Une composition selon la revendication 4 dans laquelle le nitrate est du nitrate de sodium.

6. Une composition selon une quelconque des revendications précédentes dans laquelle le composé contenant du zinc et de l'oxygène est de l'oxyde de zinc.

7. Une composition selon une quelconque des revendications précédentes dans laquelle le rapport entre le nitrate de sodium et le charbon de bois se trouve entre 6/4 et 7/3.

8. Une composition selon la revendication 7 dans laquelle le pourcentage en poids d'oxyde de zinc dans la composition finale est de 20%.

9. Une cartouche de produit fumigatoire comprenant un récipient en carton totalement ou partiellement rempli d'une composition selon une quelconque des revendications précédentes.

10. Une cartouche selon la revendication 9 possédant une amorce s'étendant entre l'extérieur du récipient et la composition de sorte que, a l'usage, l'allumage de l'amorce entraîne l'inflammation de la composition et la production résultante de monoxyde de carbone gazeux.
